(19)

Europäisches
Patentamt
European
Patent Office
Office européen
des brevets

(11) **EP 2 373 046 A2**

(12) **EUROPEAN PATENT APPLICATION**

(43) Date of publication:
**05.10.2011 Bulletin 2011/40**

(51) Int Cl.:
***H04N 13/00*** *(2006.01)*

(21) Application number: **11156663.4**

(22) Date of filing: **02.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.03.2010 TR 201002451**

(71) Applicant: **Vestel Elektronik Sanayi ve Ticaret A.S.**
**45030 Manisa (TR)**

(72) Inventors:
• **Özkalayci, Burak Oguz**
  **45030 Manisa (TR)**
• **Tasli, Emrah**
  **45030, Manisa (TR)**

(74) Representative: **Cayli, Hülya**
**Paragon Consultancy Inc.**
**Koza Sokak No: 63/2**
**GOP**
**06540 Ankara (TR)**

(54) **Super resolution based n-view + n-depth multiview video coding**

(57)     Present invention defines a super resolution based coding method for N-view and N-depth multiview video. A multiview video contains information of images from different views of a scene. Redundant information is shared by especially neighbouring frames of the image, which increases the bit rate of the video appreciably. The method proposed in the present invention offers an encoding phase in which all images of the different frames of view are down scaled (2) and encoded using N-view and N-depth video encoding (3). In the decoding phase, the encoded video is divided into different frames of views (4) and original resolution of a frame is reconstructed (6) using said redundant information kept in the neighbouring frames of said frame.

Figure 1

## Description

### Technical Field

The present invention provides a super resolution based efficient coding which can be used in multiview contents having N-view + N-depth format. The aim of the method is to reduce the bit rate of the N-view + N-depth formatted multiview stream while preserving visual quality of the content.

### Prior Art

3D displays are the focus of the present development of displays because of user demands. Hence, interest of manufacturers is also attracted to 3D technology and 3D technology is being developed by research and development divisions of display device manufacturers.

Multiview video technology, in which more than one camera captures same scene from different view points, is developed due to user demands. The development of multiview technology has brought the need for a video compression and application standard.

State of the art presents rendering capabilities with the techniques such as image based rendering (IBR), which will soon make the multiview video a streaming standard for 3D contents.

Moreover, auto-stereoscopic displays can create 3D feeling with the proper usage of multiview stream.

N-view + N-depth is a further scenario for 3D content formats. With the N-view + N-depth format, a plurality of views of the scene are encoded along with their corresponding depth maps and intermediate views of the scene is rendered at the receiver by the given information of different views and their depth maps.

A multi-video compression standard named Multiview Video Coding (MVC) has been declared by MPEG community, which is an amendment to previous H.264/AVC standard. MVC is a combination of efforts by MPEG/VCEG that enables efficient encoding of sequences captured simultaneously from more than one camera using a single video stream. Due to MVC standard background, MVC is compatible with H.264/AVC. Thus, older devices and software to decode stereoscopic (two-view) video streams are supported by MVC standard by ignoring additional information for second view.

Combined temporal and inter-view prediction is the key for efficient MVC due to large amount of inter-view statistical dependencies contained in multiview video. A frame from a certain camera can be predicted not only from temporally related frames from the same camera but also from the frames of neighbouring cameras. Thus, said interdependencies can be used for efficiency and improvement in video image.

Prior art document US 2010/034293A proposes a method and an apparatus of multiview coding and decoding. In the process of encoding multiview video images, a frame number and view identifier information of the image that uses auxiliary reference information are written into a code stream, and sent to the decoder. The decoder obtains the frame number and the view identifier information of the image that uses the auxiliary reference information, and determines the auxiliary reference information applied to a specified image according to the frame number and the view identifier information. The method does not propose a method for reduction of bit rate hence it's insufficient as a complete solution for multi view video coding.

Another prior art document MX 2009003888 proposes a method for encoding and decoding of a multi view image in which an image is predicted based on at least one previous intra frame of a previous image and a picture of current image processing block, which is generated for a different view than a view at which the intra picture of the previous image processing block is generated. The method proposed in MX 2009003888 is based on prediction which does not have a guaranteed image quality, that is quality degradation of the image after encoding and decoding phases is highly probable.

### Brief Description of the Invention

The present invention offers a novel video coding method based on super resolution for N-view + N-depth video. The method is based on the employment of redundant information kept in adjacent frames. The present invention proposes to decrease the resolution of all views of the scene in the encoding process. A residual coding can also be employed in case of an unwanted level of image quality degradation because of N-view + N-depth encoding. In the decoding phase, the resolution and detail of the different views of the scene is re-constructed based on the information of the neighbouring views of the image.

### Object of the Invention

The object of the present invention is to provide a super resolution based N-view + N-depth multiview coding method.

Another object of the present invention is to decrease multiview video bit rate with minimum or zero image quality degradation.

Another object of the present invention is to employ residual coding along with super resolution based decoding to ensure image quality.

## Brief Description of the Drawings

Figure 1; shows the proposed encoder device structure for the N-view + N-depth multiview video format.

Figure 2; shows the proposed 3D warp based registration of the multiview images for super resolution.

Figure 3; shows an application of warping process

Figure 4; shows another application of warping process

The reference numbers as used in figures may possess the following meanings;

| | |
|---|---|
| Intensity and depth maps of a multiview image | (1) |
| Down-scaling unit | (2) |
| Multiview encoding unit for N-view + N-depth multiview video format | (3) |
| Multiview decoding unit for N-view + N-depth multiview video format | (4) |
| Decoded N-view + N-depth multiview video at downscaled resolution | (5) |
| Super resolution upscaling unit | (6) |
| Reconstructed N-view + N-depth multiview video at original resolution | (7) |
| Residual coding unit | (8) |
| An image plane of one of the views in the multiview content | (9) |
| The camera center for projection | (10) |
| A pixel/sub-pixel point on the image plane | (11) |
| Back projection trajectory of a pixel on the image plane | (12) |
| Back projected point in 3D space | (13) |
| The depth value of the point X with respect to the camera $C_0$ | (14) |

## Detailed Description of the Invention

The present invention offers a method to be used in the encoding and decoding phases of a multiview video which reduces the bit-rate of the video while it preserves the quality of the video.

The proposal of the method is to decrease the resolution of each different view frame of the multiview image during the encoding phase of the video and to re-construct each frame in the decoding phase by using extra information given in the neighbouring frames of the frame to be re-constructed.

A multiview video data contains the image of the scene at the very same time from different viewing angles (1). That is, information for some points and/or regions of the same scene is repeated in the data of the image. This redundant information can be utilized to increase the resolution of the each frame by using the 3D multiview geometry and image registration techniques.

Throughout description, the terms "transmitter" and "receiver" will be used for discriminating operation side of steps of the present invention, transmitter meaning operator for steps before transmission of encoded video and receiver meaning operator for steps after receiving encoded video.

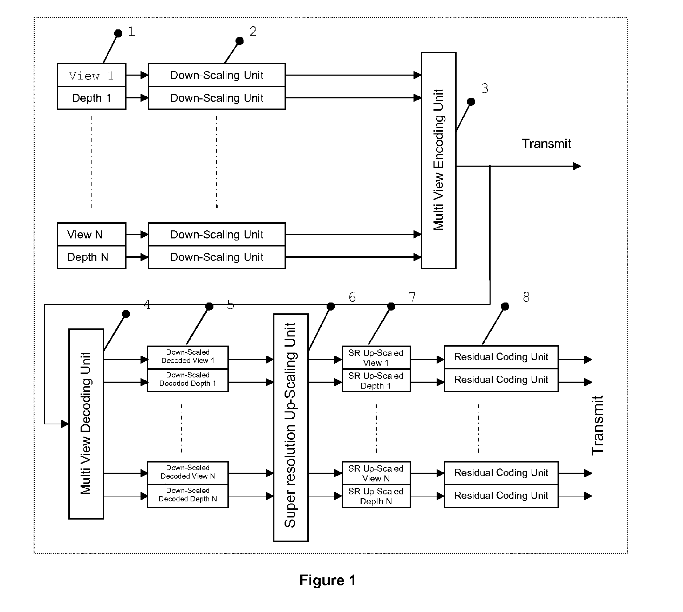

A functional block diagram is given in Figure 1. During the encoding phase at the transmitter side, all of the different views of the original multiview image are down-scaled in the down scaling unit (2). Then said down-scaled images are encoded with multiview encoding unit (3).

A decoding phase, in which the multiview encoded image is decoded in the multiview decoding unit (4) and up-scaled in the super resolution upscaling unit (6), may be employed at the transmitter side after said encoding phase to check whether image quality degradation is minimum or none. If said degradation is over a predefined limit, a residual encoding may be used instead of N-view + N-depth video encoding proposal of the present invention.

At the receiver side the multiview image input data is first divided into different views (5). If a residual encoding is realized, residual decoding is used by residual decoding unit (8). The data of the all views of the image is then decoded in the multi view decoding unit (6) and super resolution image is constructed (7) and original image is obtained.

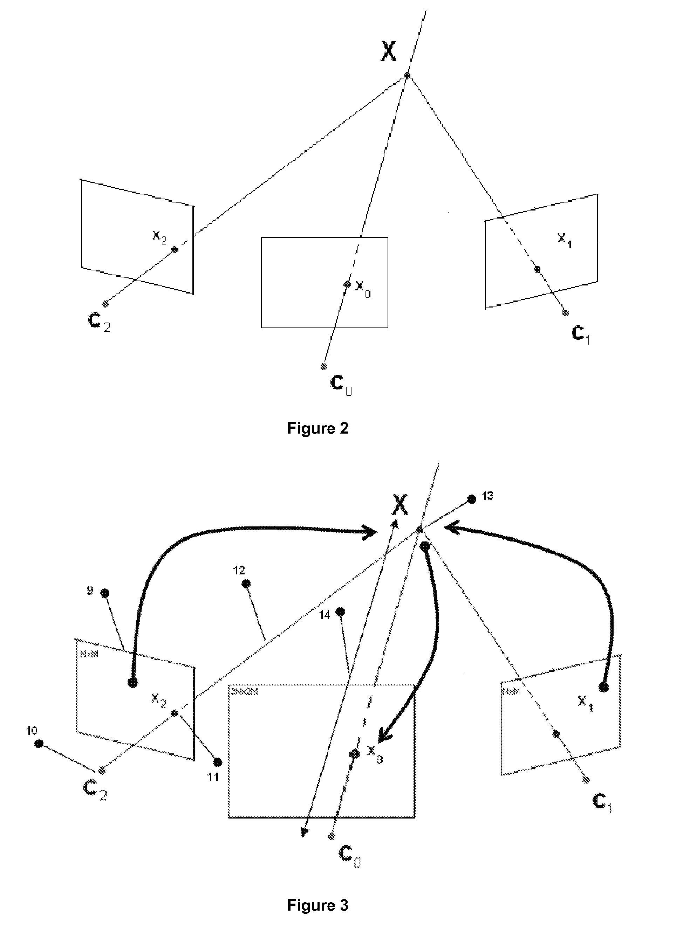

An embodiment of the invention comprises a multiview camera setup for 3 cameras (Figure 2). The real coordinates of the scene point X is mapped to the camera array with projection matrix Pco

$$X_{C0}^{2D} = P_{C0} \times X_{C0}^{3D} \qquad (1)$$

The equation (1) shows the projection operation. In the equation, $X_{C0}^{2D}$ is the image information which comprises pixel information containing intensity and/or color information of the image captured by $C_0$ whereas $X_{C0}^{3D}$ is three dimensional object information which contains intensity and/or color information of the object. The projection matrix $P_{C0}$ is a 3 by 4 projection matrix for camera $C_0$. Since $X_{C0}^{2D}$ and $P_{C0}$ are known, three dimensional object information can be obtained. Using this calculated 3D information and a second camera projection matrix, the same point on a different said second camera can be calculated with the formula (2).

$$X_{C1}^{2D} = P_{C1} \times X_{C0}^{3D} \qquad (2)$$

A novel step is taken here that the same projection operation is done on a third camera. The more number of cameras are involved, the better the scene is represented. The projection operation results in high quality high resolution image of the scene. Also higher Peak Signal to Noise Ratio (PSNR) values than standard interpolation methods are obtained.

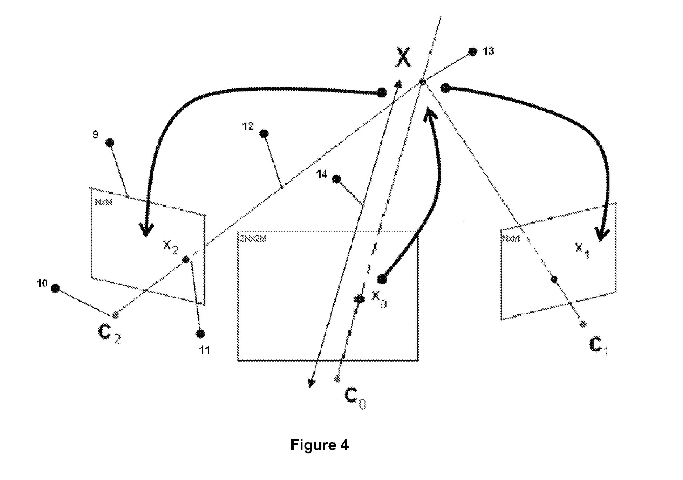

The projection operation for a reference frame is done by warping the image on the neighbouring frames of said reference frame. The warping process can be realized in two different approaches, which are given in figure 3 and figure 4.

In an application of warping process (figure 3), the image of the reference frame to be super resolutioned is shown in the middle of two neighbouring frames (9). The pixels in the neighbouring frames are back-projected (12) to 3D positions (13). Then the pixels are projected to its 2D position on reference frame using their depth values (14). The operation is conducted for every frame of the image being taken as reference frame. Each reference frame is super resolutioned by warping said neighbouring frames of reference frame.

Another application of warping process (figure 4) considers the frame of the interest as the beginning of the warping operation. The 2D information on said frame of the interest is back-projected to 3D positions (13) using its depth value (14). Then this back projected 3D information is projected to neighbouring cameras (12). Then corresponding pixels (11) of the neighbouring camera is carried to the said camera of interest and super resolution is obtained.

Both embodiments have advantages and disadvantages in terms of image quality and computational complexity. The choice of an embodiment may be done regarding the hardware platform, computational power and memory access.

The block diagram of an N-view + N-depth multiview coding apparatus using super resolution based method is given in figure 1. The view and depth maps of a scene (1) are input to down-scaling unit (2), where said view and depth maps (1) are down-scaled. The outputs of down-scaling unit (2) are input to multi-view encoding unit (3) and N-view + N-depth video encoding is carried out. The encoded N-view + N-depth video is input to multi-view decoding unit (4) and different views and depth maps (5) of the video are separated. The output of multi-view decoding unit (4) is then processed by super resolution upscaling unit (6) and super resolutioned images (7) are generated. If the decoding phase, which starts by decoding encoded N-view + N-depth video in multiview decoding unit, is carried out at the transmitter side, in order to check quality degradation, a residual coding unit (8) may be employed in case of an undesired level of image quality degradation.

Throughout projection operation, the projected pixels in the neighbouring frames may correspond to non-integer pixel locations on the reference frame. In this case, a method in order to handle said non-integer located pixel information and to locate said information in integer locations should be used. Several interpolation methods can be used to handle said non-integer located pixel information.

**Claims**

1. A super resolution based N-view and N-depth video coding apparatus **characterized in that** it comprises;

   - A downscaling unit (2) for down scaling of images of different views of a scene
   - A multiview encoding unit (3) for multiview encoding of said multiview video using said down-scaled images of different views of said scene
   - A multiview decoding unit (4) for multiview decoding of the said encoded video dividing said video into images of different views
   - A super resolution upscaling unit (6) for super resolution of said images of said different views.

2. A super resolution based N-view and N-depth video apparatus according to claim 1, which further comprises a residual coding unit (8) for residual coding of a video, in case of image quality degradation due to super resolution based encoding, or decoding of a video.

3. A super resolution based coding method for N-view and N-depth multiview video in which images from multiple cameras with different view angles are included **characterized in that** it comprises the steps of;

   - Down scaling of images of different views of a scene at a transmitter.
   - Multiview encoding of said multiview video using said down-scaled images of different views of said scene at said transmitter
   - Multiview decoding of the said encoded video dividing said encoded video into images of different views at a decoder side.
   - Super resolution of said images of said different views by using information kept in neighbouring frames at said decoder side
   - Residual decoding of said super resolutioned video if residual encoding is realized in said N-view and N-depth multiview video at said decoder side.

4. A method according to claim 3 wherein, said video encoding is checked for image quality degradation, by comprising the steps of;

   - Multiview decoding of said encoded video at said transmitter side
   - Super resolution of said multiview decoded video at said transmitter side
   - Comparing said super resolutioned video with original video at said transmitter side
   - Employing a residual encoding at said transmitter side if said image quality degradation is above a predefined limit.

5. A method according to claim 3 wherein said super resolution comprises the steps of;

   - Selecting a frame to be super resolutioned
   - Back projecting the pixels (11) in neighbouring frames (9) of said selected frame to their 3 dimensional positions (13)
   - Projecting said projected pixels (13) of said neighbouring frames (11) to the said selected frame.

6. A method according to claim 3 wherein said super resolution comprises the steps of;

   - Selecting a frame to be super resolutioned
   - Back projecting the pixels of the said selected frame to 3 dimensional positions (13)
   - Projecting the said back projected pixels (13) to neighbouring frames (9) of said selected frame
   - Carrying the said neighbouring views (9) to said selected frame.

7. A method according to claim 5 or 6 wherein interpolation is used for non-integer located pixel information.

**Figure 1**

X

C₂

x₂

x₀

C₀

x₁

C₁

**Figure 2**

X

13

12

9

14

N×M

x₂

2N×2M

x₀

N×M

x₁

10

C₂

11

C₀

C₁

**Figure 3**

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 2010034293 A